# EUROPEAN PATENT APPLICATION

(11) **EP 4 606 544 A1**
(43) Date of publication of application: **27.08.2025**
(21) Application number: 25158856.2
(22) Date of filing: 19.02.2025
(51) Int. Cl.: B29C 37/00, B29C 70/34, B29C 70/54, B29C 70/44, B29C 70/30

(54) **COMPOSITE FORMING**

(30) Priority: 23.02.2024 US 202418585654
(71) Applicant: The Boeing Company, Arlington, VA 22202 (US)
(72) Inventor: Plummer, Steven Joseph, Arlington, 22202 (US); Robins, Brian Gregory, Arlington, 22202 (US); Willden, Kurtis Shuldberg, Arlington, 22202 (US)
(74) Representative: Arnold & Siedsma

(57) **Abstract**

Methods of creating a formed shape into composite layups with reduced wrinkling. A composite layup is sealed in a vacuum envelope, the composite layup comprising at least one of a resin or a thermoplastic material. The composite layup is formed onto a tool while the composite layup is held under vacuum in the vacuum envelope to create a formed shape in the composite layup.

## Description

### BACKGROUND INFORMATION

### 1. Field:

The present disclosure relates generally to composite forming and more specifically to methods of forming composites with reduced wrinkling.

### 2. Background:

Dry carbon fabrics can be used for resin infusion applications. Dry carbon fabrics are often formed into a part shape before infusion and cure. Due to the bulk of dry composite fabrics, the types of tooling may be limited. Inconsistencies such as wrinkles can be generated during some methods of forming.

Other materials, including non-crimped fabric (NCF) and unidirectional prepreg laminates also go through shaping applications. It is desirable to reduce inconsistencies during methods of forming.

Therefore, it would be desirable to have a method and apparatus that takes into account at least some of the issues discussed above, as well as other possible issues. For example, it would be desirable to present additional methods of forming dry composite fabrics. Additionally, it would be desirable to reduce or prevent wrinkles while forming composite materials.

### SUMMARY

The present disclosure provides a method of forming a composite structure. A composite layup is sealed in a vacuum envelope, the composite layup may comprise at least one of a resin or a thermoplastic material. The composite layup is formed onto a tool while the composite layup is held under vacuum in the vacuum envelope to create a formed shape in the composite layup.

The present disclosure provides shaping a composite layup with reduced wrinkles. The composite layup can be debulked in the vacuum envelope. The composite layup may be processed while in the formed shape.

The composite layup under vacuum within a vacuum envelope may be loaded into a forming machine. The composite layup under vacuum within the vacuum envelope may be swept against a tool using sweepers of the forming machine.

Layers of material may be laid up to form the composite layup. The composite layup may be debulked by applying vacuum within a vacuum envelope prior to the forming. The composite layup can be heated while under vacuum to maintain the formed shape in the composite layup by tacking the composite layup.

With regard to the above, the present disclosure provides a method of forming a composite structure comprising: sealing a composite layup in a vacuum envelope, the composite layup preferably comprising at least one of a resin or a thermoplastic material and forming the composite layup onto a tool while the composite layup is held under vacuum in the vacuum envelope to create a formed shape in the composite layup.

A level of vacuum in the vacuum envelope can be changed during the forming of the composite layup onto the tool to control the forming of the composite layup.

The composite layup may be heated while under vacuum to maintain the formed shape in the composite layup.

Heating the composite layup may comprise melting at least one of a thermoplastic veil or thermoplastic stitching in the composite layup.

Heating the composite layup may comprise heating the composite layup on the tool in an oven.

Heating the composite layup may comprise applying directed heat onto the composite layup while sweepers of a forming machine compress the composite layup against the tool.

The vacuum envelope may be sealed against the tool.

Resin may be infused into the composite layup while the vacuum envelope is sealed against the tool.

The composite layup sealed in the vacuum envelope may be loaded into a forming machine, wherein forming the composite layup onto the tool may be performed by sweeping the composite layup onto the tool by the forming machine.

The composite layup may be resin infused within the vacuum envelope.

The composite layup may be dubulked prior to the forming by applying the vacuum within the vacuum envelope prior to the forming.

The composite layup with the formed shape may be removed from the vacuum envelope and may be placed into or onto a second tool.

The thermoplastic material may take the form of at least one of a thermoplastic veil or a thermoplastic stitching.

The disclosed method provides a composite layup with reduced wrinkles, for example by way of shaping the composite layup preferably comprising debulking the composite layup in the vacuum envelope; and forming the composite layup onto the tool while the composite layup is under vacuum within the vacuum envelope to create the formed shape in the composite layup; and processing the composite layup while in the formed shape.

Processing the composite layup may comprise resin infusing the composite layup with the formed shape within the vacuum envelope.

Forming the composite layup onto the tool may comprise sweeping the composite layup onto the tool by a forming machine.

Processing the composite layup may comprise heating the composite layup to maintain the formed shape in the composite layup.

The vacuum in the vacuum envelope may be increased after forming the composite layup onto the tool to maintain the formed shape.

The vacuum applied to the composite layup may be controlled to facilitate the forming of the composite layup.

Processing of the composite layup may comprise removing the composite layup with the formed shape from the vacuum envelope; and preferably placing the composite layup with the formed shape at least one of into or onto a second tool.

The composite layup under vacuum within the vacuum envelope may be loaded into a forming machine may be swept under vacuum within the vacuum envelope against a tool using sweepers of the forming machine.

The composite layup may be heated while the sweepers hold the composite layup against the tool to maintain a formed shape of the composite layup.

The composite layup may be heated on the tool using an oven.

Heating the composite layup may melt at least one of a thermoplastic veil or thermoplastic stitching.

Resin may be infused into the composite layup in the vacuum envelope after sweeping the composite layup against the tool.

Sweepers of the forming machine may take the form of inflatable bladders or compliant wipers, and sweeping the composite layup under vacuum within the vacuum envelope against a tool may comprise sweeping the composite layup against the tool using the inflatable bladders or compliant wipers to add pressure to reduce wrinkling during the sweeping.

The method may comprise the following steps: laying up layers of material to form a composite layup, the composite layup preferably comprising at least one of a resin or a thermoplastic material; debulking the composite layup by applying vacuum within a vacuum envelope prior to the forming; forming the composite layup onto a tool while the composite layup is under vacuum within the vacuum envelope to create a formed shape in the composite layup; and heating the composite layup while under vacuum to maintain the formed shape in the composite layup by tacking the composite layup.

The vacuum applied to the composite layup may be controlled to control slippage of the layers of material of the composite layup.

The composite layup may be resin infused within the vacuum envelope after forming the composite layup.

Forming the composite layup may comprise sweeping the composite layup under vacuum within the vacuum envelope against a tool using sweepers of a forming machine, wherein sweepers of the forming machine take the form of inflatable bladders or compliant wipers, and wherein sweeping the composite layup under vacuum within the vacuum envelope against a tool comprises sweeping the composite layup against the tool using the inflatable bladders or compliant wipers to add pressure to reduce wrinkling during the sweeping.

Layers of material may be stitched together using thermoplastic stitching prior to laying up the layers of material to form a composite layup.

The present disclosure is further described with reference to the following description and drawings.

### BRIEF DESCRIPTION OF THE DRAWINGS

**Figure 1** is an illustration of an aircraft in accordance with the present disclosure;
**Figure 2** is an illustration of a block diagram of a manufacturing environment in accordance with the present disclosure;
**Figure 3** is a flowchart of steps of forming composite layup in accordance with the present disclosure;
**Figure 4** is a front view of a composite layup sealed in a vacuum envelope within a forming machine in accordance with the present disclosure;
**Figure 5** is a flowchart of a method of forming a composite structure in accordance with the present disclosure;
**Figure 6** is a flowchart of a method of forming a composite structure in accordance with the present disclosure;
**Figure 7** is a flowchart of a method of forming a composite structure in accordance with the present disclosure;
**Figure 8** is a flowchart of a method of forming a composite structure in accordance with the present disclosure;
**Figure 9** is an illustration of an aircraft manufacturing and service method in a form of a block diagram in accordance with the present disclosure; and
**Figure 10** is an illustration of an aircraft in a form of a block diagram in which the present disclosure may be implemented.

### DETAILED DESCRIPTION

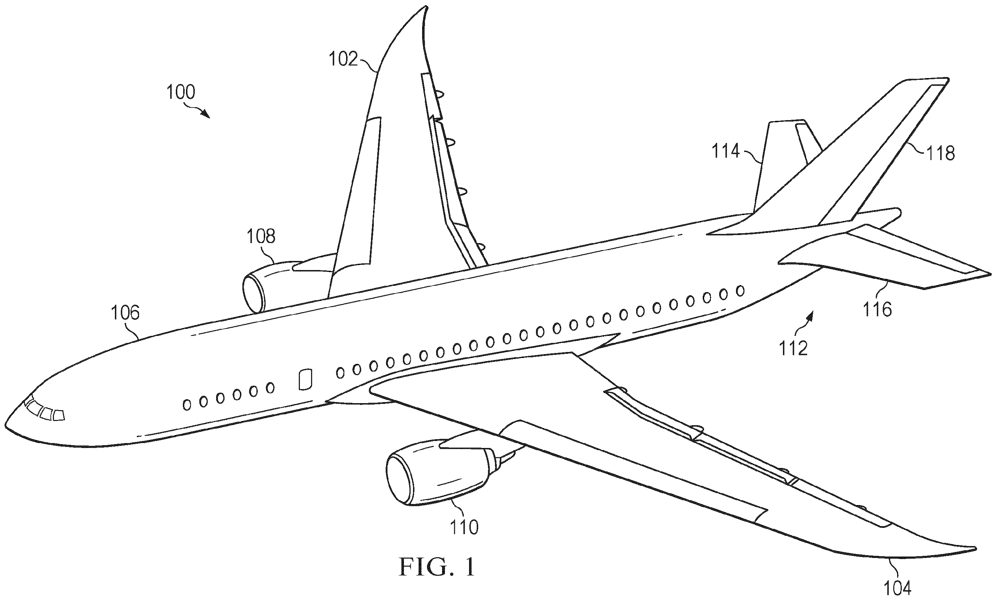

Turning now to **Figure 1****,** an illustration of an aircraft is depicted in accordance with the present disclosure. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite components shaped using the present disclosure. A portion of at least one of wing **102,** wing **104,** body **106,** horizontal stabilizer **114,** horizontal stabilizer **116,** or vertical stabilizer **118** can be manufactured using the present disclosure. A stiffener of at least one of wing **102,** wing **104,** body **106,** horizontal stabilizer **114,** horizontal stabilizer **116,** or vertical stabilizer **118** can be manufactured using the present disclosure.

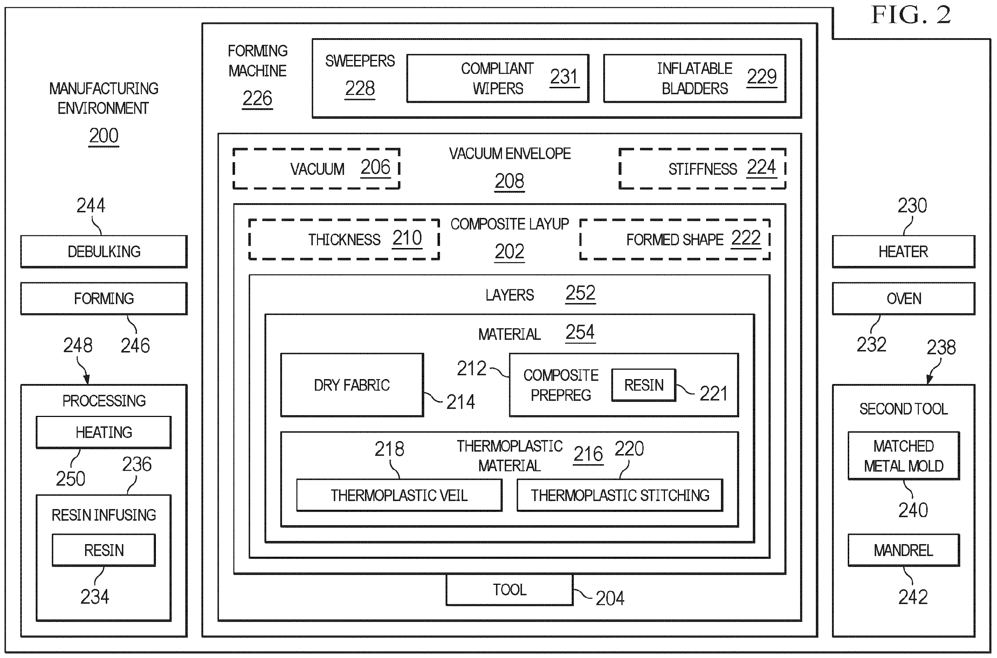

Turning now to **Figure 2****,** an illustration of a block diagram of a manufacturing environment is depicted in accordance with the present disclosure. A portion of aircraft **100** of **Figure 1** can be manufactured in manufacturing environment **200.** Composite layup **202** can be formed against tool **204** in manufacturing environment **200.**

Composite layup **202** is debulked prior to forming composite layup **202** on tool **204.** Debulking **244** composite layup **202** prior to forming **246** is performed by applying vacuum **206** within vacuum envelope **208** prior to forming **246.** Vacuum envelope **208** is formed of an impermeable material such as a vacuum bag. To debulk composite layup **202,** vacuum **206** is applied to composite layup **202.** To apply vacuum **206** to composite layup **202,** composite layup **202** is sealed in vacuum envelope **208.** By applying vacuum **206** to composite layup **202** in vacuum envelope **208,** thickness **210** of composite layup **202** is reduced.

Composite layup **202** can take any desirable form. Composite layup **202** comprises layers **252** of material **254.** Material **254** can take the form of either composite prepreg **212** or dry fabric **214.** Layers **252** of material are laid up to form composite layup **202.** some Composite layup **202** is substantially flat.

Composite layup **202** comprises at least one of resin **221** or thermoplastic material **216.** Thermoplastic material **216** can be present with dry fabric **214** or composite prepreg **212.** Thermoplastic material **216 may** take the form of at least one of thermoplastic veil **218** or a thermoplastic stitching **220.** Resin **221** may be part of composite prepreg **212.** Composite layup **202** may comprise one of a dry fabric **214** preform or a laminate formed of composite prepreg **212.** A dry fabric **214** preform is non-impregnated. Composite layup **202** may comprise composite prepreg **212.** Composite layup **202** may comprise dry fabric **214.** Composite layup **202** may comprises thermoplastic material **216.** Thermoplastic material **216** may comprise one of thermoplastic veil **218** or thermoplastic stitching **220.** One of thermoplastic veil **218** or thermoplastic stitching **220** may be used with dry fabric **214** to form composite layup **202.**

Composite layup **202** is formed onto tool **204** while composite layup **202** is held under vacuum **206** in vacuum envelope **208.** Forming **246** composite layup **202** onto tool **204** creates formed shape **222** in composite layup **202.** By forming composite layup **202** onto tool **204** while composite layup **202** is held under vacuum **206,** wrinkles are reduced.

Tool **204** can have any desirable cross-sectional shape. Tool **204** may have a planar surface. Tool **204** can have a bend, kink, curve, or other type of change in direction. Vacuum envelope **208** can stretch to accommodate a bend, kink, cure, or other type of feature in tool **204.**

Forming machine **226** may be used to sweep composite layup **202** onto tool **204** to form composite layup **202** onto tool **204.** Sweepers **228** of forming machine **226** sweep composite layup **202** onto tool **204.** Composite layup **202** sealed in vacuum envelope **208** may be loaded into forming machine **226,** and composite layup **202** is formed onto tool **204** by sweeping composite layup **202** onto tool **204** by forming machine **226.**

Sweepers **228** can take the form of inflatable bladders **229** or compliant wipers **231.** Compliant wipers **231** can take the form of fingers, squeegees, or any other desirable form of sweeper. Sweepers **228** are configured to press composite layup **202** sealed in vacuum envelope **208** against tool **204.** Pressing composite layup **202** against tool **204** changes the shape of composite layup **202** to create formed shape **222** in composite layup **202.**

Inflatable bladders **229** can be filled with any desirable type of material. Inflatable bladders **229** can be filled with at least one of air, a different gas, a fluid, a gel, a polymer, or any other desirable material. Silicone may be within inflatable bladders **229.**

Pressure applied by sweepers **228** applies an elevated pressure to composite layup **202** during forming **246.** The elevated pressure during forming **246** controls wrinkles and bulk.

A level of vacuum **206** in vacuum envelope **208** during forming **246** of composite layup **202** onto tool **204** may control forming **246** of composite layup **202.** By controlling the level of vacuum **206** in vacuum envelope **208,** stiffness **224** of composite layup **202** in vacuum envelope **208** can be controlled. By increasing vacuum **206,** stiffness **224** of composite layup **202** in vacuum envelope **208** can be increased. By decreasing vacuum **206,** stiffness **224** of composite layup **202** in vacuum envelope **208** can be decreased. Vacuum **206** is decreased to decrease stiffness **224** to more easily form composite layup **202** against tool **204.** Reducing stiffness **224** can allow for more slippage of layers of composite layup **202** relative to each other.

After forming **246,** processing **248** may be performed on composite layup **202.** Processing **248** may be performed on composite layup **202** in vacuum envelope **208.** Processing **248** may include additional steps for manufacturing. Processing **248** can include at least one of heating **250** or resin infusing **236.**

Composite layup **202** may be heated while under vacuum **206** to maintain formed shape **222** in composite layup **202.** Heating **250** composite layup **202** may melt and/or soften thermoplastic material **216.** Thermoplastic material **216** may at least be softened to tack composite layup **202.**

Composite layup **202** may be formed of dry fabric **214** and heating **250** may be performed prior to removing composite layup **202** from vacuum envelope **208.** Composite layup **202** may be formed of composite prepreg **212** and composite layup **202** may be removed from vacuum envelope **208** without heating **250.**

Heating **250** composite layup **202** may comprise melting at least one of thermoplastic veil **218** or thermoplastic stitching **220** in composite layup **202.** Melting at least one of thermoplastic veil **218** or thermoplastic stitching **220** holds composite layup **202** together. Thermoplastic veil **218** stiffens composite layup **202.** Thermoplastic stitching **220** provides tack and keeps composite layup **202** together.

Heating **250** composite layup **202** may comprise heating **250** composite layup **202** on tool **204** in oven **232.** Heating **250** composite layup **202** may comprise applying directed heat onto composite layup **202** while sweepers **228** of forming machine **226** compress composite layup **202** against tool **204.** Heating **250** composite layup **202** may comprise applying directed heat using heater **230.** Heater **230** can comprise at least one of blowers, conductive heaters in tool **204,** or any other type of directed heater. Heater **230** may comprise heating elements integral to one of forming machine **226** or tool **204.** Composite layup **202** may be heated by blowers or other types of heater **230** movable relative to forming machine **226.**

Composite layup **202** in vacuum envelope **208** with formed shape **222** may be placed onto or into second tool **238** prior to heating **250** composite layup **202.** Composite layup **202** in vacuum envelope **208** may be placed into matched metal mold **240** prior to heating **250** composite layup **202.** Composite layup **202** in vacuum envelope **208** may be placed onto mandrel **242** prior to heating **250** composite layup **202.** Heating **250** composite layup **202** may be performed prior to removing composite layup **202** from vacuum envelope **208.**

After removing composite layup **202** with formed shape **222** from vacuum envelope **208,** composite layup **202** with formed shape **222** may be placed into or onto second tool **238.** Second tool **238** can take the form of one of matched metal mold **240** or mandrel **242.**

Vacuum envelope **208** can be sealed against tool **204.** Resin infusing **236** may be performed with vacuum envelope **208** sealed against tool **204.** Resin **234** may be infused into composite layup **202** while vacuum envelope **208** is sealed against tool **204.** Resin infusing **236** composite layup **202** may be performed within vacuum envelope **208.** Resin infusing **236** can be performed on composite layup **202** with formed shape **222** outside of vacuum envelope **208.** Resin infusing **236** can be performed on composite layup **202** in matched metal mold **240.**

The illustration of manufacturing environment **200** in **Figure 2** is not meant to imply physical or architectural limitations to the manner in which the present disclosure may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in the present disclosure.

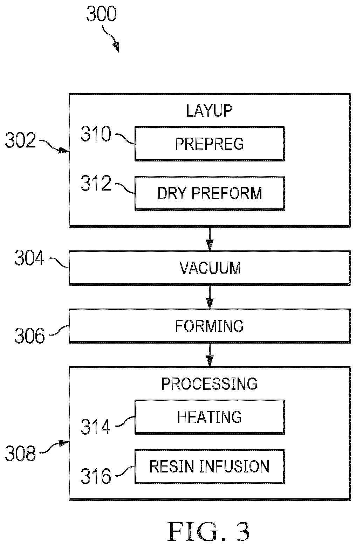

Turning now to **Figure 3****,** a flowchart of steps of forming composite layup is depicted in accordance with the present disclosure. Flowchart **300** can be implemented in manufacturing environment **200** of **Figure 2****.** Flowchart **300** can be implemented to form a composite part of aircraft **100** of **Figure 1****.**

In step **302,** layup of a composite layup is performed. The composite layup comprises one of prepreg **310** or dry preform **312.** In step **304,** vacuum is applied to the composite layup to debulk the composite layup.

While applying vacuum to the composite layup, the composite layup is formed in step **306.** The composite layup is formed by shaping the composite layup onto a tool. Forming the composite layup to the tool creates a formed shape in the composite layup. Forming the composite layup while the composite layup is under vacuum applies an elevated pressure that can be used to control wrinkles and bulk of the composite layup.

After forming in step **306,** the composite layup undergoes processing in step **308.** At least one processing procedure can be completed with the composite layup within the vacuum envelope. At least one procedure of step **308** can be performed with the composite layup outside of the vacuum envelope. Processing in step **308** may comprise at least one of heating **314** or resin infusion **316.** Step **308** may include placing the composite layup at least one of into or onto a second tool.

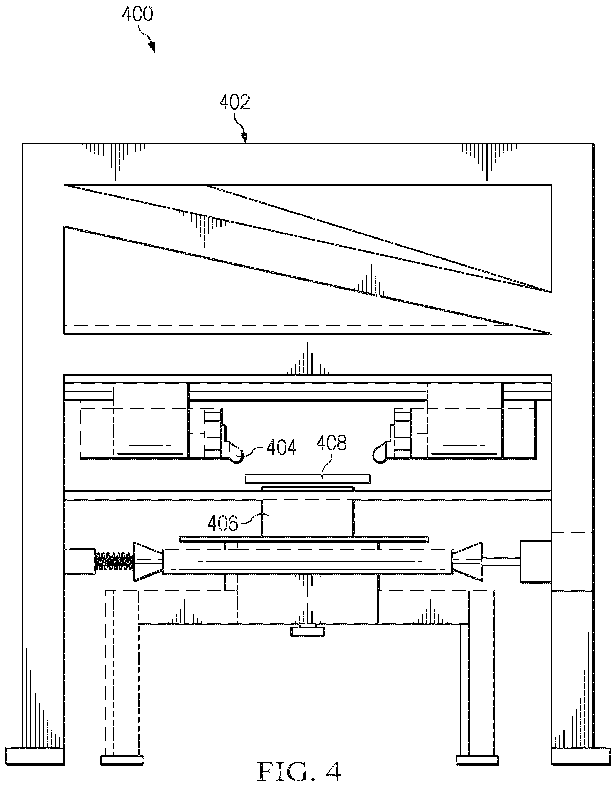

Turning now to **Figure 4****,** a front view of a composite layup sealed in a vacuum envelope within a forming machine is depicted in accordance with the present disclosure. In view **400** of forming machine **402,** composite layup **408** sealed in a vacuum envelope has been loaded into forming machine **402.** Forming machine **402** is a physical implementation of forming machine **226** of **Figure 2****.** Forming machine **402** forms composite layup **408** sealed in the vacuum envelope onto tool **406** using sweepers **404.** Sweepers **404** may take the form of inflatable bladders. Sweepers **404** may also take the form of compliant wipers such as fingers, squeegees, or any other desirable form of sweeper. Sweepers **404** are configured to press composite layup **408** sealed in the vacuum envelope against tool **406.** Pressing composite layup **408** against tool **406** changes the shape of composite layup **408** to create a formed shape in composite layup **408.**

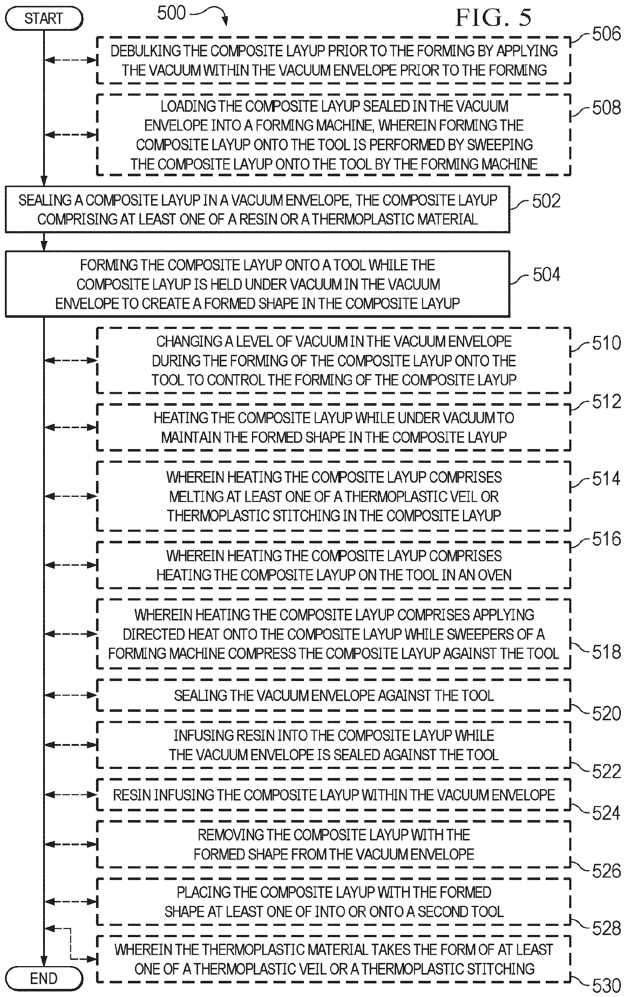

Turning now to **Figure 5****,** a flowchart of a method of forming a composite structure is depicted in accordance with the present disclosure. Method **500** can be performed to create a composite component of aircraft **100.** Method **500** can be performed on composite layup **202** in vacuum envelope **208** of **Figure 2****.** Method **500** can be a method comprising steps of flowchart **300** of **Figure 3****.** Method **500** can be performed using forming machine **402** of **Figure 4****.**

Method **500** seals a composite layup in a vacuum envelope, the composite layup comprising at least one of a resin or a thermoplastic material (operation **502**). Method **500** forms the composite layup onto a tool while the composite layup is held under vacuum in the vacuum envelope to create a formed shape in the composite layup (operation **504**). Afterwards, method **500** terminates.

Method **500** can debulk the composite layup prior to the forming by applying the vacuum within the vacuum envelope prior to the forming (operation **506**). By applying the vacuum within the vacuum envelope, a thickness of the composite layup is reduced.

Method **500** loads the composite layup sealed in the vacuum envelope into a forming machine, wherein forming the composite layup onto the tool is performed by sweeping the composite layup onto the tool by the forming machine (operation **508**). The forming machine can comprise any desirable type of sweepers. The sweepers of the forming machine may comprise at least one of inflatable bladders or compliant wipers. Compliant wipers can take the form of fingers, squeegees, or any other desirable type of sweeper.

Method **500** may change a level of vacuum in the vacuum envelope during the forming of the composite layup onto the tool to control the forming of the composite layup (operation **510**). Changing a level of vacuum in the vacuum envelope changes a stiffness of the composite layup and vacuum envelope. The composite layup has a greater stiffness when a greater vacuum is applied to the composite layup. The vacuum may be lowered to lower the stiffness of the composite layup at some portions of the forming.

Method **500** heats the composite layup while under vacuum to maintain the formed shape in the composite layup (operation **512**). Heating the composite layup may take place in an oven. Heating the composite layup may be performed by a directed heat source.

Heating the composite layup may comprise melting at least one of a thermoplastic veil or thermoplastic stitching in the composite layup (operation **514**). Melting at least one of the thermoplastic veil or thermoplastic stitching may hold the composite layup together. The thermoplastic veil stiffens the material. The thermoplastic stitching provides tack and keeps the composite layup together.

Heating the composite layup may comprise heating the composite layup on the tool in an oven (operation **516**). The tool and the composite layup can be moved into an oven. The vacuum envelope may be sealed against the tool prior to heating.

Heating the composite layup may comprise applying directed heat onto the composite layup while sweepers of a forming machine compress the composite layup against the tool (operation **518**). The directed heat can comprise at least one of infra-red heaters above and/or below the layup, inductive heaters above and/or below the layup, inductive heating in the tool, blowers, conductive heaters in the tool, or any other type of directed heater.

Method **500** seals the vacuum envelope against the tool (operation **520**). Method **500** infuses resin into the composite layup while the vacuum envelope is sealed against the tool (operation **522**).

Method **500** resin infuses the composite layup within the vacuum envelope (operation **524**). Any desirable equipment can be used to perform the resin infusion. Additional tooling or an additional vacuum bag can be placed around the vacuum envelope.

Method **500** removes the composite layup with the formed shape from the vacuum envelope (operation **526**). The composite layup with the formed shape may be removed from the vacuum envelope after heat treatment. The composite layup with the formed shape may be removed from the vacuum envelope prior to a heat treatment.

Method **500** may place the composite layup with the formed shape into or onto a second tool (operation **528**). The second tool may take the form of a matched metal mold. The second tool may take the form of a second mandrel. The thermoplastic material may take the form of at least one of a thermoplastic veil or a thermoplastic stitching (operation **530**).

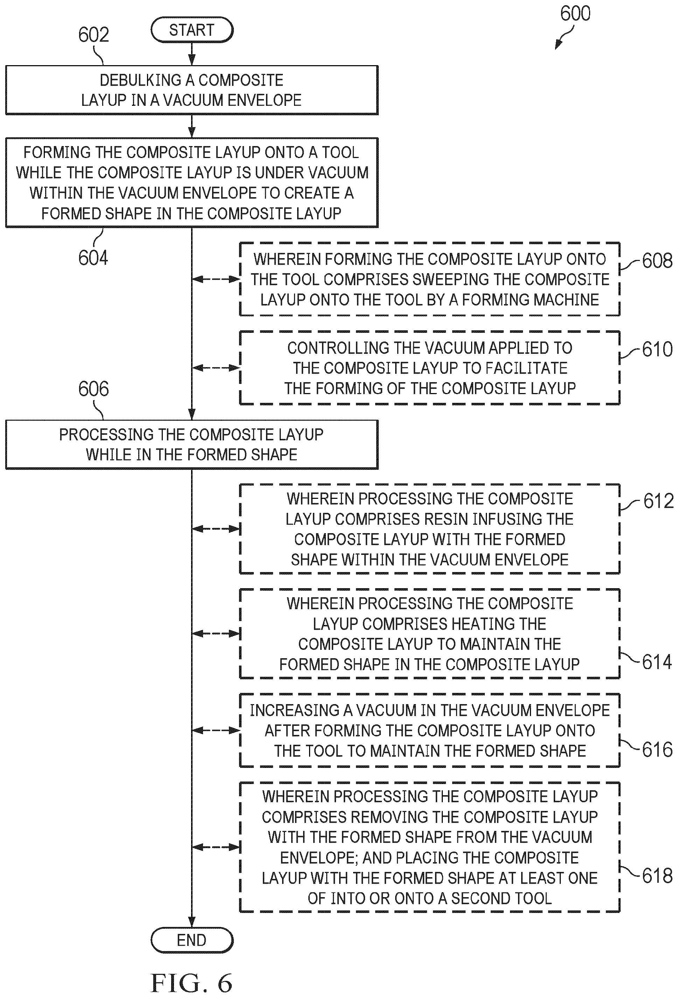

Turning now to **Figure 6****,** a flowchart of a method of forming a composite structure is depicted in accordance with the present disclosure. Method **600** can be performed to create a composite component of aircraft **100.** Method **600** can be performed on composite layup **202** in vacuum envelope **208** of **Figure 2****.** Method **600** can be a method comprising steps of flowchart **300** of **Figure 3****.** Method **600** can be performed using forming machine **402** of **Figure 4****.**

Method **600** debulks a composite layup in a vacuum envelope (operation **602**). Method **600** forms the composite layup onto a tool while the composite layup is under vacuum within the vacuum envelope to create a formed shape in the composite layup (operation **604**). Method **600** processes the composite layup while in the formed shape (operation **606**). Afterwards, method **600** terminates.

Forming the composite layup onto the tool may comprise sweeping the composite layup onto the tool by a forming machine (operation **608**). The forming machine can comprise any desirable type of sweepers to perform the sweeping. The sweepers of the forming machine may comprise at least one of inflatable bladders or compliant wipers. Compliant wipers may comprise squeegees, fingers, or any other desirable type of sweeper.

Method **600** may control the vacuum applied to the composite layup to facilitate the forming of the composite layup (operation **610**). By controlling the level of vacuum in the vacuum envelope, stiffness of composite layup in the vacuum envelope can be controlled. By increasing vacuum, stiffness of composite layup in the vacuum envelope can be increased. By decreasing vacuum, stiffness of composite layup in the vacuum envelope can be decreased. Vacuum can be decreased to decrease stiffness to more easily form composite layup against the tool. Reducing stiffness can allow for more slippage of layers of composite layup relative to each other.

Processing the composite layup may comprise resin infusing the composite layup with the formed shape within the vacuum envelope (operation **612**). Processing the composite layup may comprise heating the composite layup to maintain the formed shape in the composite layup (operation **614**). Heating the composite layup may comprise heating the composite layup while the sweepers hold the composite layup against the tool to maintain a formed shape of the composite layup. Heating the composite layup may comprise heating the composite layup on the tool using an oven. Heating the composite layup melts at least one of a thermoplastic veil or thermoplastic stitching.

Method **600** increases a vacuum in the vacuum envelope after forming the composite layup onto the tool to maintain the formed shape (operation **616**). Increasing the vacuum in the vacuum envelope increases the stiffness of the composite layup.

Processing the composite layup may comprise removing the composite layup with the formed shape from the vacuum envelope; and placing the composite layup with the formed shape at least one of into or onto a second tool (operation **618**). The second tool can take any desirable form. The second tool can take the form of at least one of a matched metal mold or a mandrel.

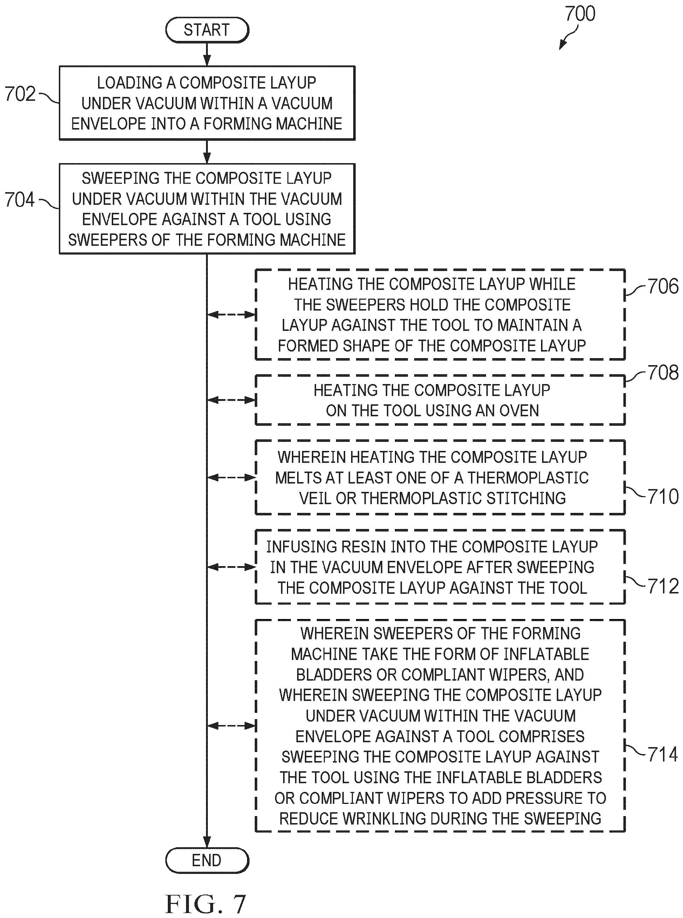

Turning now to **Figure 7****,** a flowchart of a method of forming a composite structure is depicted in accordance with the present disclosure. Method **700** can be performed to create a composite component of aircraft **100.** Method **700** can be performed on composite layup **202** in vacuum envelope **208** of **Figure 2****.** Method **700** can be a method comprising steps of flowchart **300** of **Figure 3****.** Method **700** can be performed using forming machine **402** of **Figure 4****.**

Method **700** loads a composite layup under vacuum within a vacuum envelope into a forming machine (operation **702**). Method **700** sweeps the composite layup under vacuum within the vacuum envelope against a tool using sweepers of the forming machine (operation **704**). Afterwards, method **700** terminates.

Method **700** heats the composite layup while the sweepers hold the composite layup against the tool to maintain a formed shape of the composite layup (operation 7**0**6). The composite layup may be heated by heating elements integral to one of the forming machine or the tool. The composite layup may be heated by blowers or other types of heaters movable relative to the forming machine.

Method **700** heats the composite layup on the tool using an oven (operation **708**). Heating the composite layup melts at least one of a thermoplastic veil or thermoplastic stitching (operation **710**). Melting at least one of thermoplastic veil or thermoplastic stitching holds composite layup together. Thermoplastic veil stiffens the composite layup. Thermoplastic stitching provides tack and keeps composite layup together.

Method **700** infuses resin into the composite layup in the vacuum envelope after sweeping the composite layup against the tool (operation **712**). Any desirable equipment can be used to perform the resin infusion. Additional tooling or an additional vacuum bag can be placed around the vacuum envelope.

Sweepers of the forming machine may take the form of inflatable bladders or compliant wipers, and wherein sweeping the composite layup under vacuum within the vacuum envelope against a tool comprises sweeping the composite layup against the tool using the inflatable bladders or compliant wipers to add pressure to reduce wrinkling during the sweeping (operation **714**).

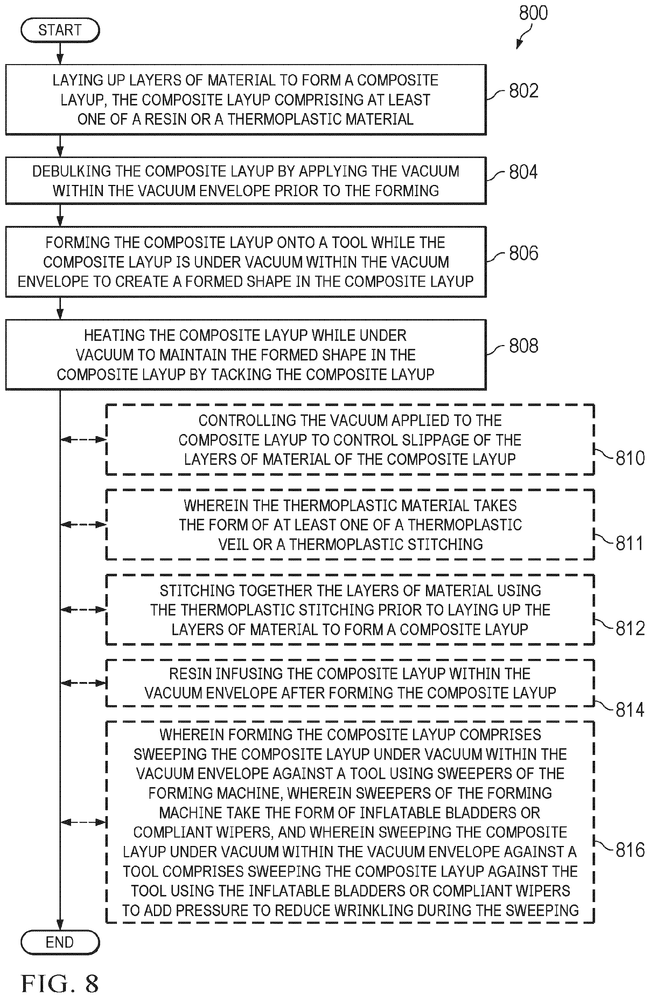

Turning now to **Figure 8****,** a flowchart of a method of forming a composite structure is depicted in accordance with the present disclosure. Method **800** can be performed to create a composite component of aircraft **100.** Method **800** can be performed on composite layup **202** in vacuum envelope **208** of **Figure 2****.** Method **800** can be a method comprising steps of flowchart **300** of **Figure 3****.** Method **800** can be performed using forming machine **402** of **Figure 4****.**

Method **800** lays up layers of material to form a composite layup, the composite layup comprising at least one of a resin or a thermoplastic material (operation **802**). Method **800** debulks the composite layup by applying the vacuum within the vacuum envelope prior to the forming (operation **804**). Method **800** forms the composite layup onto a tool while the composite layup is under vacuum within the vacuum envelope to create a formed shape in the composite layup (operation **806**). Method **800** heats the composite layup while under vacuum to maintain the formed shape in the composite layup by tacking the composite layup (operation **808**). Afterwards, method **800** terminates.

Method **800** controls the vacuum applied to the composite layup to control slippage of the layers of material of the composite layup (operation **810**). The vacuum applied to the composite layup can be decreased to increase the slippage of the layers of material relative to each other during forming of the composite layup.

The thermoplastic material takes the form of at least one of a thermoplastic veil or a thermoplastic stitching (operation **811**). Method **800** stitches together the layers of material using the thermoplastic stitching prior to laying up the layers of material to form a composite layup (operation **812**). The layers of material may be stitched into a number of separate stitched sets. Each stitched set can comprise any desirable number of layers of material.

Method **800** resin infuses the composite layup within the vacuum envelope after forming the composite layup (operation **814**). The vacuum envelope may be vacuum sealed to a tool prior to resin infusing the composite layup.

Forming the composite layup comprises sweeping the composite layup under vacuum within the vacuum envelope against a tool using sweepers of the forming machine, wherein sweepers of the forming machine take the form of inflatable bladders or compliant wipers, and wherein sweeping the composite layup under vacuum within the vacuum envelope against a tool comprises sweeping the composite layup against the tool using the inflatable bladders or compliant wipers to add pressure to reduce wrinkling during the sweeping (operation **816**). The pressure within the inflatable bladders of the forming machine can be greater than present in the inflatable bladders when forming the composite layup under vacuum than forming composite prepreg that is not under vacuum.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams illustrate the architecture, functionality, and operation of some possible implementations of apparatuses and methods in the present disclosure. In this regard, each block in the flowcharts or block diagrams may represent at least one of a module, a segment, a function, or a portion of an operation or step.

In some alternative implementations of the present disclosure, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **506** through operation **528** may be optional. For example, operation **608** through operation **620** may be optional. For example, operation **706** through operation **712** may be optional. For example, operation **810** through operation **816** may be optional.

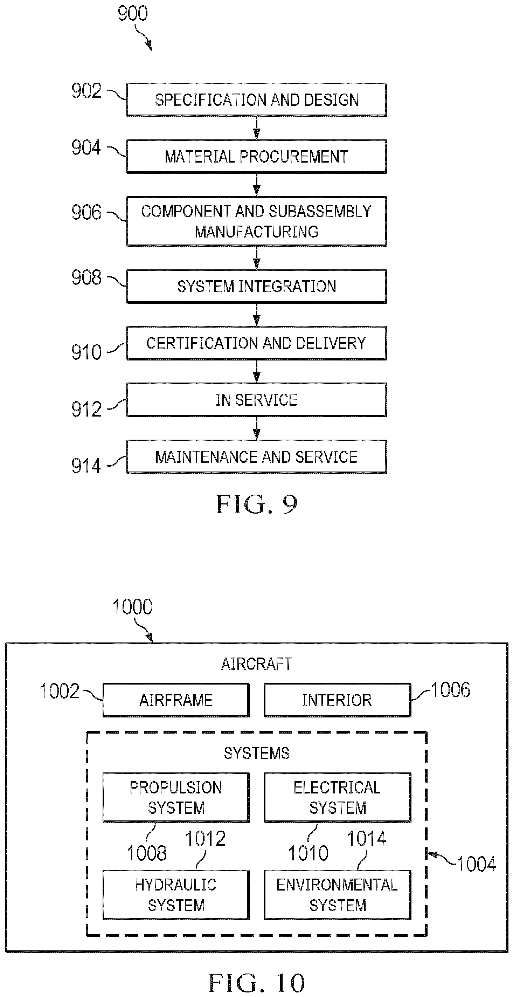

The present disclosure may be described in the context of aircraft manufacturing and service method **900** as shown in **Figure 9** and aircraft **1000** as shown in **Figure 10****.** Turning first to **Figure 9****,** an illustration of an aircraft manufacturing and service method in a form of a block diagram is depicted in accordance with the present disclosure. During pre-production, aircraft manufacturing and service method **900** may include specification and design **902** of aircraft **1000** in **Figure 10** and material procurement **904.**

During production, component and subassembly manufacturing **906** and system integration **908** of aircraft **1000** takes place. Thereafter, aircraft **1000** may go through certification and delivery **910** in order to be placed in service **912.** While in service **912** by a customer, aircraft **1000** is scheduled for routine maintenance and service **914,** which may include modification, reconfiguration, refurbishment, or other maintenance and service.

Each of the processes of aircraft manufacturing and service method **900** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 10****,** an illustration of an aircraft in a form of a block diagram is depicted in which the present disclosure may be implemented. In this example, aircraft **1000** is produced by aircraft manufacturing and service method **900** of **Figure 9** and may include airframe **1002** with plurality of systems **1004** and interior **1006.** Examples of systems **1004** include one or more of propulsion system **1008,** electrical system **1010,** hydraulic system **1012,** and environmental system **1014.** Any number of other systems may be included.

Apparatuses and methods embodied herein may be employed during at least one of the stages of aircraft manufacturing and service method **900.** One or more illustrative embodiments may be manufactured or used during at least one of component and subassembly manufacturing **906,** system integration **908,** in service **912,** or maintenance and service **914** of **Figure 9****.**

The disclosure utilizes forming under vacuum in a new process for dry material. A vacuum bag is used to remove bulk from the composite layup, such as a dry laminate. The composite layup is formed against a tool. The composite layup can be formed using a forming machine. The forming machine can use inflatable bladders to add pressure to reduce wrinkling and further control bulk.

The disclosure controls wrinkle and bulk behavior of a composite material for forming methods. The disclosure controls wrinkle and bulk behavior during subsequent operations following forming the composite layup to a mandrel under vacuum. For example, the disclosure controls wrinkle and bulk behavior during subsequent operations with closed mold tooling approaches as well. For closed mold tooling, bulk can be tightly controlled to allow for the tool to close and prevent or reduce inconsistencies.

A vacuum bag enclosing the composite layup may be used along with sweepers that apply pressure to achieve elevated pressures beyond vacuum pressure. The forming pressure can be applied by inflatable bladders in a forming machine. Integrated heating during forming may be used to further assist with bulk control. Heat can be applied to the composite layup following forming. Elevated pressure during forming is used to control wrinkles and bulk. Temperature control can be used to tack the material at least one of during or following forming and subsequently reduce bulk.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method of forming a composite structure comprising:
sealing a composite layup in a vacuum envelope and
forming the composite layup onto a tool while the composite layup is held under vacuum in the vacuum envelope to create a formed shape in the composite layup.

2. The method of claim 1, further comprising:
changing a level of vacuum in the vacuum envelope during the forming of the composite layup onto the tool to control the forming of the composite layup.

3. The method of claim 1 or 2, further comprising:
heating the composite layup while under vacuum to maintain the formed shape in the composite layup.

4. The method of any of the claims 1-3, wherein the composite layup comprises at least one of a resin or a thermoplastic material

5. The method of claim 4, wherein heating the composite layup comprises melting at least one of a thermoplastic veil or thermoplastic stitching in the composite layup.

6. The method of any of the claims 3-5, wherein heating the composite layup comprises heating the composite layup on the tool in an oven

7. The method of any of the preceding claims, comprising applying directed heat onto the composite layup while sweepers of a forming machine hold or compress the composite layup against the tool, or wherein forming the composite layup onto the tool is performed by sweeping the composite layup onto the tool by a forming machine.

8. The method of claim 6, further comprising:
infusing resin into the composite layup in the vacuum envelope after sweeping the composite layup against the tool.

9. The method of claim 6 or 7, wherein sweepers of the forming machine take the form of inflatable bladders or compliant wipers.

10. The method of claim 9, wherein sweeping the composite layup under vacuum within the vacuum envelope against a tool comprises sweeping the composite layup against the tool using the inflatable bladders or compliant wipers to add pressure to reduce wrinkling during the sweeping.

11. The method according to any of the preceding claims, further comprising debulking the composite layup prior to the forming by applying the vacuum within the vacuum envelope prior to the forming.

12. The method of any of the preceding claims 4-11, wherein the thermoplastic material takes the form of at least one of a thermoplastic veil or a thermoplastic stitching.

13. The method of any of the preceding claims, further comprising increasing a vacuum in the vacuum envelope after forming the composite layup onto the tool to maintain the formed shape.

14. The method of any of the preceding claims, further comprising
removing the composite layup with the formed shape from the vacuum envelope; and
placing the composite layup with the formed shape into and/or onto a second tool.

15. A reduced wrinkle composite structure, obtainable according to the method of any of the preceding claims.
